# EUROPEAN PATENT SPECIFICATION

(11) **EP 4 075 231 B1**
(45) Date of publication and mention of the grant of the patent: **18.09.2024**
(21) Application number: 22167649.7
(22) Date of filing: 11.04.2022
(51) Int. Cl.: G05D 1/00, A63B 47/02

(54) **ROBOTIC COLLECTION SYSTEM**
ROBOTISCHES SAMMELSYSTEM
SYSTÈME DE COLLECTE ROBOTIQUE

(30) Priority: 12.04.2021 JP 2021067105
(43) Date of publication of application: 19.10.2022
(73) Proprietor: Yamabiko Corporation, Ohme-shi, Tokyo 198-8760 (JP)
(72) Inventor: YAMADA, Ryota, Tokyo, 1988760 (JP); HIRAKI, Hidenori, Tokyo, 1988760 (JP); KOSHIKAWA, Yoshiharu, 1300 Wavre (BE)
(74) Representative: Canzler & Bergmeier Patentanwälte Partnerschaft mbB

(56) References cited:
- WO-A2-2009/022929
- CN-A- 109 432 725
- JP-A- 2020 087 134
- US-A1- 2021 038 950

## Description

### BACKGROUND

### 1. Technical Field

The present invention relates to a robotic collection system.

### 2. Related Art

The robotic collection system is a system configured to automatically collect target objects (objects to be collected) scattered on a field while autonomously traveling on the field. As an example, there has been known a robotic ball picker configured to automatically collect balls hit and scattered in a golf course or a golf practice range, which is disclosed, for example, in Japanese Patent Laid-Open No. 2020-151083.

The conventional robotic collection system is configured to perform collection work according to a preset work schedule. Therefore, even though there are not many target objects on the field, the work is performed according to the set schedule. Consequently, the conventional robotic collection system has a problem that it is not possible to perform efficient collection work, in view of the battery consumption of a working robot autonomously traveling. On the other hand, even though there are many target objects on the field, the work is performed according to the set schedule, and therefore the conventional robotic collection system has a problem that it is not possible to properly manage to collect the target objects even by performing the work according to the schedule.

WO 2009/022929 A2 discloses a motorised system with electric traction with computer vision for outdoor environments, which can interact with the surrounding environment in an autonomous way or remotely operated. This vehicle tows a trailer that permits, amongst other functions, to perform golf balls picking. The totally autonomous golf picking system comprises : a base with, at least, two linked wheels, each driven by an independent motor; a vision system with a variable amount of video cameras; a set of sensors - humidity, accelerometer, compass, coders, temperature, ultrasounds, GPS - that allow the path optimisation of the system; an image acquisition and processing system; a continuous processing unit of sensor data and motor control; a trailer with a mechanical device for picking the balls and a ball container with an automatic opening system to an unloading dock; and a unit of rechargeable batteries through external terminals.

US 2021/038950 A1 describes a tennis ball picking robot that picks up scattered tennis balls in the court. comprising a computing system, a custom trained neural network executing on the computing system, vision and proximity sensors, the mechanical apparatus to collect tennis balls in the ball collection basket and an electric energy source. The custom trained neural network is trained using a data set to collect balls effectively using a camera and distance sensors.

CN 109 432 725 A also discloses a system for picking up tennis balls.

### SUMMARY

The present invention has been proposed to address the above-described problems. It is therefore an object of the invention to provide a robotic collection system capable of performing efficient collection work, and performing proper collection management by changing the work schedule depending on the state of the target objects on the field.

To solve the above-described problems, the present invention provides a robotic collection system according to claim 1.

The robotic collection system having the above-described features performs efficient collection work, and performs proper collection management by changing the work schedule of the working robot depending on the state of the target objects on the field.

### BRIEF DESCRIPTION OF THE DRAWINGS

Fig. 1 illustrates a deployment state of a robotic collection system according to an embodiment of the invention;
Fig. 2 illustrates an example of the facility configuration of the robotic collection system according to an embodiment of the invention;
Fig. 3 illustrates an example of the system configuration of the robotic collection system according to an embodiment of the invention;
Fig. 4 illustrates a controller of the robotic collection system according to an embodiment of the invention;
Fig. 5 illustrates an example of an existing work schedule of the robotic collection system according to an embodiment of the invention;
Fig. 6 illustrates an example of the processing flow of a management controller of the robotic collection system according to an embodiment of the invention;
Fig. 7 illustrates an example of the processing flow of the management controller of the robotic collection system according to an embodiment of the invention;
Fig. 8 illustrates an example of the processing flow of the management controller of the robotic collection system according to an embodiment of the invention;
Fig. 9 illustrates an example of the processing flow of the management controller of the robotic collection system according to an embodiment of the invention; and
Fig. 10 illustrates an example of the processing flow of the management controller of the robotic collection system according to an embodiment of the invention.

### DETAILED DESCRIPTION

Hereinafter, an embodiment of the present invention will be described with reference to the drawings. The same basic numbers in the different drawings indicate the same functional sections, and therefore repeated description for each of the drawings is omitted.

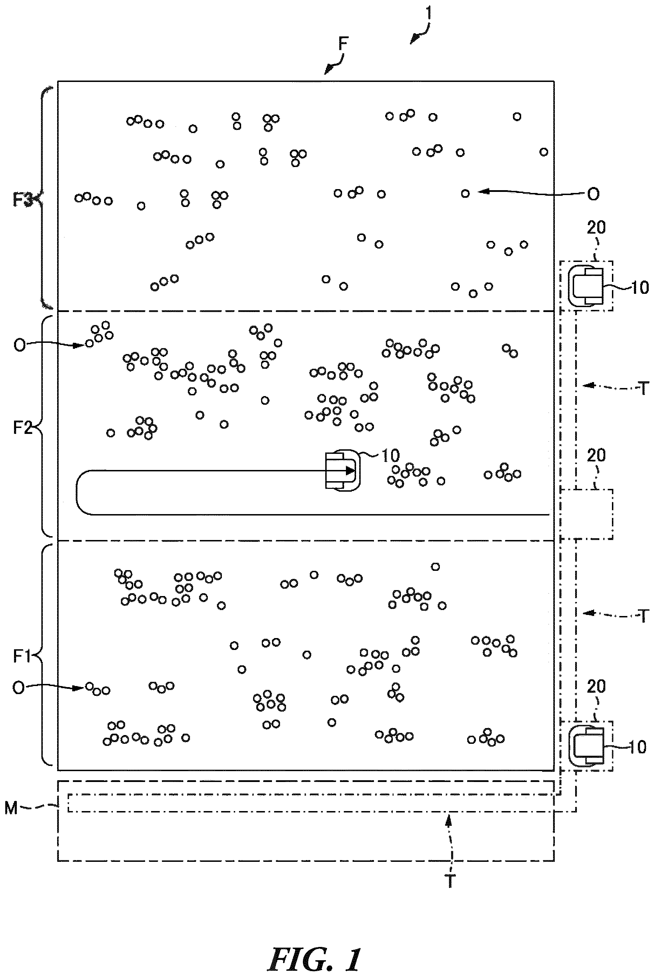

As illustrated in Fig. 1, a robotic collection system 1 is installed for a field F, and configured to collect target objects O, for example, balls which are scattered on the field F. Here, the field F is a working area for collection work to collect the target objects O. The surface of the field F is not limited, but may be grass, artificial grass, the ground, and carpet.

The robotic collection system 1 includes working robots 10 configured to autonomously travel on the field F. The working robots 10 autonomously travel on the field F to pick up and collect the target objects O on the travelling route. As an example of the embodiment herein, the robotic collection system 1 sets the working area of the working robots 10 autonomously traveling as a virtual region based on position information, and therefore recognizes that the field F is a virtual region based on the position information. In addition, the working area may not necessarily be a virtual region, but may be set by using a beacon or a marker.

With an example illustrated in Fig. 1, the whole field F is divided into a plurality of fields F1, F2, and F3, and the working robot 10 is deployed in each of the fields F1, F2 and F3. With the illustrated example, although the field F is divided into the plurality of fields F, one or more working robots 10 may be assigned in one field F. In addition, the plurality of working robots 10 may include, not only the working robots 10 performing the work to collect the target objects O, but also a working robot 10 configured to perform different work, for example, work to manage the field F such as lawn mowing while autonomously traveling.

Standby places 20 are provided around the field F (F1, F2 and F3). The working robots 10 wait in the standby places 20. These standby places 20 are, for example, charging bases where batteries equipped in the electric working robots 10 are charged. In addition, the standby places 20 are discharge places where the target objects O collected in the working robots 10 are discharged. Moreover, the standby places 20 may be specific places set by the manager of the working robots 10 or by the working robots 10. With the illustrated example, the standby places 20 are provided outside the field F, but may be provided in the field F. Here, with the illustrated example, the discharge places are provided in the plurality of standby places 20, respectively, and the discharge places are connected by a conveyance channel T to convey the target objects O, and the conveyance channel T extends to a management facility M adjacent to the field F.

For example, in a golf practice range, the management facility M includes a plurality of hitting boxes to hit balls as the target objects O to the field F, and a feeder to feed the target objects O collected in the conveyance channel T to each of the hitting boxes. The management facility M can know the state of use of the target objects O, based on, for example, the amount of the target objects O fed to each of the hitting boxes and the amount of collected target objects O.

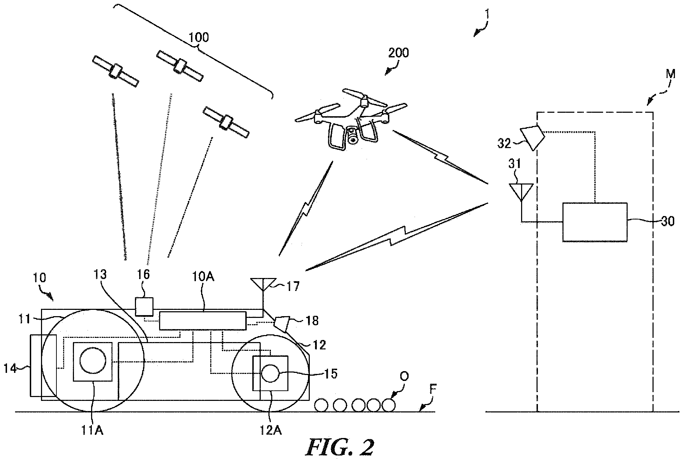

Fig. 2 illustrates an example of the facility configuration of a robotic collection system 1. The working robot 10 includes: a traveling part 11 having wheels to travel on the field F; a working part (picker) 12 configured to pick up and collect the target objects O on the field F; an accommodation part (reception tank) 13 configured to accommodate the target objects O collected by the working part 12; a controller (CPU) 10A configured to control the operation of a traveling drive part (motor) 11A configured to drive the traveling part 11 and the operation of a working drive part (motor) 12A configured to drive the working part 12; and a battery 14 as a power source of the working robot 10.

The traveling part 11 includes right and left traveling wheels, and the traveling drive part 11A is controlled to individually drive the wheels. By this means, the working robot 10 can move forward and backward, turn right and left, and steer in any direction.

The working part 12 has a mechanism to pick up the target objects O on the field F and put them into the accommodation part 13. One or each of the working part 12 and the accommodation part 13 includes a measurement part 15 configured to measure the amount of the collected target objects O. The measurement part 15 may be a counter configured to count the quantity of the target objects O picked up by the working part 12, a scale configured to measure the quantity or the weight of the target objects O accommodated in the accommodation part 13, or a load meter configured to measure the work load of the working part 12. The information measured by the measurement part 15 is inputted to the controller 10A.

In addition, the working robot 10 includes a position detector 16 for the autonomous travel. As an example of the position detector 16, a GNSS (global navigation satellite system) sensor configured to receive radio signals sent from satellites 100 of a GNSS system such as a GPS, or a receiver configured to receive radio waves generated by beacons disposed in or around the field F may be used. Here, there may be a plurality of position detectors 16. To achieve the autonomous travel of the working robot 10, the position detected by the position detector 16 is inputted to the controller 10A, and the controller 10A controls the traveling drive part 11A such that the position of the set traveling route matches the detected position, or the detected position is within the set region.

The working robot 10 includes a communication part 17 configured to transmit and receive information to and from other devices as needed. By using the communication part 17, the working robot 10 transmits and receives the information to and from a management device 30 installed in the management facility M, and other working robots 10 when a plurality of working robots 10 are deployed in the field F. Meanwhile, when images of the field F are captured by a multicopter 200 and so forth, the information of the captured image is received by the communication part 17. The information received by the communication part 17 is inputted to the controller 10A, and the communication part 17 transmits the information outputted from the controller 10A to the communication partner. Here, when the controller 10A of the working robot 10 independently performs the processing for the control, the communication part 17 may be omitted.

In addition, the working robot 10 includes a camera 18 as needed. The camera 18 is configured to capture images of the field F, and the information of the image captured by the camera 18 is inputted to the controller 10A. It is possible to know the scattered state of the target objects O on the field F, and the surface condition of the field F, based on the images captured by the camera 18.

The management device 30 provided in the management facility M is a computer in the management facility M, or a server connected to a network, and configured to manage the state of use of the target objects O in the management facility M. The state of use of the target objects O can be managed based on the total amount of the managed target objects O, the amount of the target objects O fed to each of the hitting boxes, and the amount of the collected target objects O.

The management device 30 includes a communication part 31 configured to transmit and receive the information to and from the communication part 17 of the working robot 10. When the image of the field F is obtained by using the multicopter 200, the communication part 31 can receive the information of the obtained image. Meanwhile, when the image of the field F is obtained by a camera 32 provided in the management facility M, the obtained image is transmitted directly or via the communication part 31 to the management device 30.

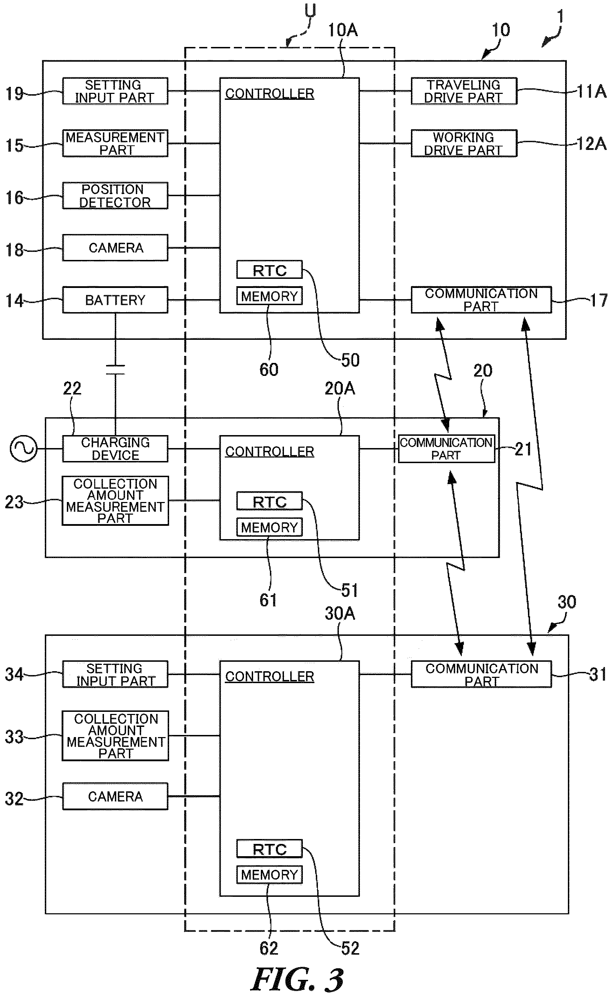

Fig. 3 illustrates an example of the system configuration of the robotic collection system 1. The controller 10A of the working robot 10 transmits and receives information via the communication part 17 as described above, and a controller (CPU) 30A of the management device 30 transmits and receives information via the communication part 31. In addition, also the standby place 20 includes a controller (CPU) 20A as needed. The controller 20A transmits and receives information via a communication part 21.

Between the controller 10A of the working robot 10 and the controller 30A of the management device 30, the communication part 17 and the communication part 31 are communicably connected to one another. Between the controller 10A of the working robot 10 and the controller 20A of the standby place 20, the communication part 17 and the communication part 21 are communicably connected to one another. Between the controller 20A of the standby place 20 and the controller 30A of the management device 30, the communication part 21 and the communication part 31 are communicably connected to one another. Here, the communication parts 17, 21, and 31 may be communicably connected to each other directly or via the network. Here, the method of communication connection is not limited, but wireless or wired communication connection is possible.

The controllers 10A, 20A and 30A include timers 50, 51, and 52 such as real-time clocks configured to measure and output the time, and memories 60, 61, and 62 configured to store information and programs, respectively. In addition, the controllers 10A, 20A, and 30A constitute a controller U which is unified by exchanging the information with each other, and the functions of the controllers 10A, 20A and 30A can be substituted for each other.

The controller 10A of the working robot 10 receives work instruction information (the existing work schedule, the scope of work, and the traveling route) from a setting input part 19, receives information about the amount of the collected target objects O from the measurement part 15, receives information about the current position of the working robot 10 from the position detector 16, receives information of the image of the field F from the camera 18, and receives information about the remaining amount of the battery from the battery 14. Then, the controller 10A controls the traveling drive part 11A and the working drive part 12A based on the inputted information, and performs the work of the working robot 10 according to the inputted work instruction information.

The controller 20A provided in the standby place 20 receives charge process information from a charging device 22 configured to charge the battery 14 of the working robot 10. In addition, the controller 20A receives information about the amount of the collected target objects O discharged to the discharge place of the standby place 20 from a collection amount measurement part 23 installed in the standby place 20. The collection amount measurement part 23 measures the number and the weight of the target objects O discharged from the working robot 10 which has returned to the standby place 20.

The controller 30A of the management device 30 receives work instruction information (the existing work schedule, the scope of work, and the traveling route) and management facility M information (business hours, users, use places, the amount of feed of the target objects O, events of the management facility M, and event times) from a setting input part 34, receives information about the amount of the target objects O collected in the management facility M from a collection amount measurement part 33 installed in the management facility M, and receives information of the image of the field F from the camera 32. Here, the collection amount measurement part 33 measures the number and the weight of the target objects O collected in the management facility M having passed through the conveyance channel T.

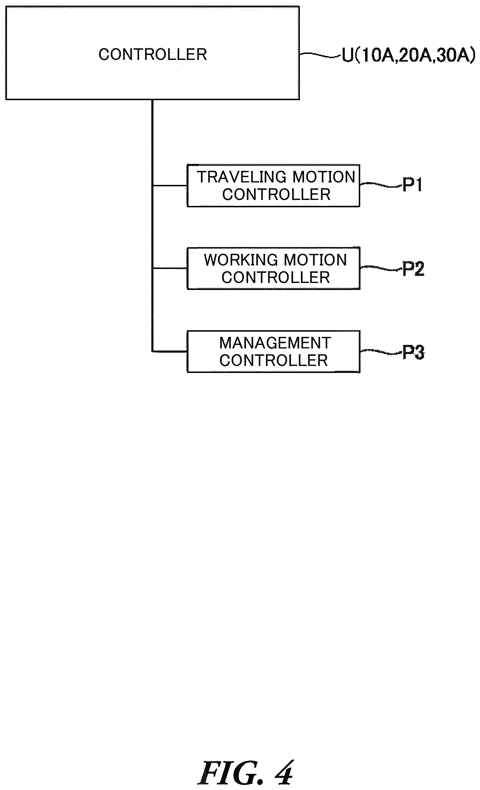

As illustrated in Fig. 4, the controller U (10A, 20A, and 30A) of the robotic collection system 1 includes a traveling motion controller P1 to control the autonomous travel of the traveling part 11 (traveling drive part 11A), a working motion controller P2 to control the motion of the working part 12 (working drive part 12A), and a management controller P3 to manage the work schedule of the working robot 10. Here, the traveling motion controller P1, the working motion controller P2 and the management controller P3 are programs to control the operation of the CPU of the controller U (10A, 20A, and 30A).

Hereinafter, an example of processing for the control of the management controller P3 will be described in detail. The basic processing of the management controller P3 is to obtain information about the amount of the target objects O on the field F, and change the existing work schedule based on the information. The information about the amount of the target objects O on the field F can be obtained by appropriately selecting and combining the above-described information, such as the information from the measurement part 15, the information from the collection amount measurement parts 23 and 33, the management facility M information from the setting input part 34, the image information from the cameras 18 and 32, and the multicopter 200 with the camera, the position information from the position detector 16, the information of the time measured by the timers 50, 51 and 52, and the information about the past collection work stored in the memories 60, 61, and 62.

Moreover, the basic processing of the management controller P3 is to increase the frequency of the standby state of the working robot 10 (increase the standby hours), when the management controller P3 determines that the efficiency of the collection work is low based on the information about the amount of the target objects O on the field F. In contrast, when the management controller P3 determines that available target objects O become scarce based on the information about the amount of the target objects O on the field F, the basic processing of the management controller P3 is to reduce the frequency of the standby state of the working robot 10 (increase the working hours).

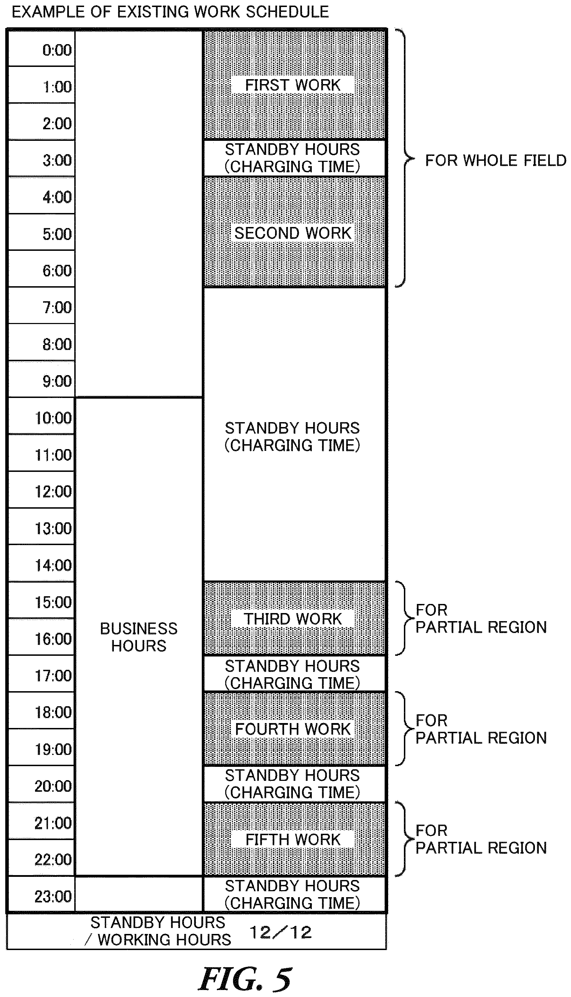

The existing work schedule is set and inputted to the controller U (10A, 20A and 30A). As illustrated in Fig. 5, for example, working hours and standby hours are set at predetermined times both in the business hours and the outside hours of one day (24 hours). With the illustrated example, after a work is continued for two to three hours, a charging time (standby hours) for one hour is set. The second work is performed in addition to the first work so that the works for the whole field F (F1, F2, and F3) are performed for six hours in the outside hours, and the third to fifth works are performed in the business hours for partial regions at which the target objects O are gathered. With this example, the ratio between the standby hours and the working hours is 12/12.

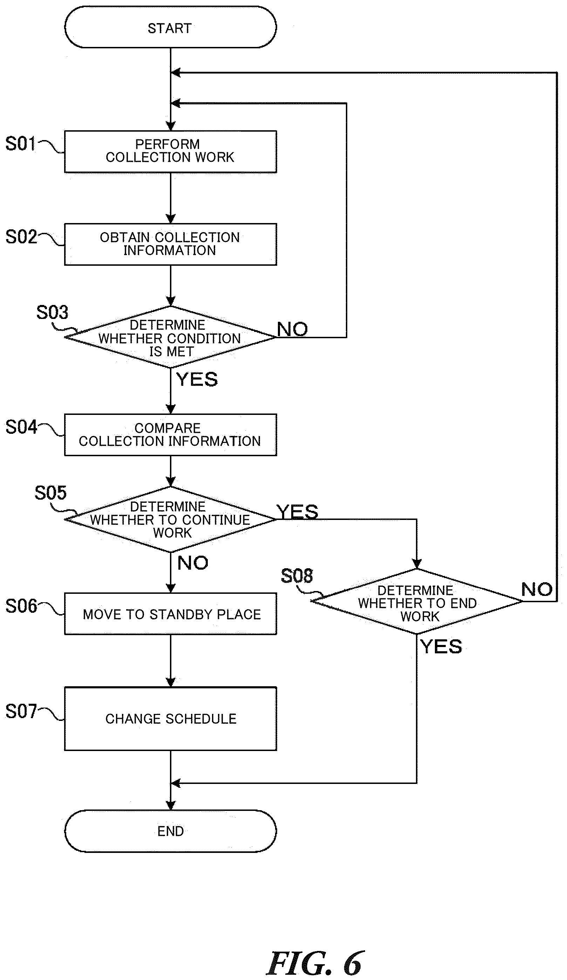

Next, a specific processing flow of the management controller P3 will be described. With an example illustrated in Fig. 6, the start of the working hours in the existing working schedule is "start" of the processing. Then, the collection work is performed by traveling the working robot 10 (step S01), and collection information is obtained accordingly (step S02). Here, the collection information is the amount (number or weight) of the collected target objects O measured by the measurement part 15, and the collection information is continuously measured until the set condition is met (step S03: NO).

This condition can be set by a user from the setting input parts 19 and 34 based on experimental values, or automatically set by the controller 10A of the working robot 10 or the controller 30A of the management device 30, based on the past information stored in the memories 60 and 62.

An example of the condition is "time." The amount of the collected target objects O as the collection information is measured until the set period of time has elapsed since the start of the work. Another example of the condition is "route." The amount of the collected target objects O as the collection information is measured until the work along the set route is done since the start of the work. Another example of the condition is "distance." The amount of the collected target objects O as the collection information is measured until the work for the set distance is done since the start of the work. Another example of the condition is "region." The amount of the collected target objects O as the collection information is measured until the work for the set region is done since the start of the work.

When the condition is met (step S03: YES), the cumulative value of the collection information obtained by NO loop of the step S03 is compared with a threshold (step S04), and it is determined whether to continue the work (step S05). That is, the work is continued when the collection information exceeds the threshold (step S05: YES), but when the collection information does not exceed the threshold, the work is not continued (step S05: NO), the working robot 10 is moved to the standby place 20 (step S06), and the existing work schedule is changed to set the standby hours (step S07).

With the example illustrated in Fig. 6, the collection information may be "time", and the condition may be "the amount of collection." In this case, the period of time until the amount of collection set as the condition is achieved is measured as the collection information, this period of time is compared with the threshold, and it is determined whether to continue the work (step S05).

Then, when it is determined to continue the work in the step S05 (step S05: YES), the steps S01 to S04 are repeated (step S08: NO) until it is determined to end the work (step S08: YES), and when a predetermined condition is met, it is determined whether to continue the work.

By this means, the collection information is compared under an always constant condition within the working hours set in the existing work schedule, and, at the time when it is determined that the amount of the target objects O on the field is small, the standby state is selected. Therefore, it is possible to allow efficient collection work, and prevent the working robot 10 from uselessly traveling.

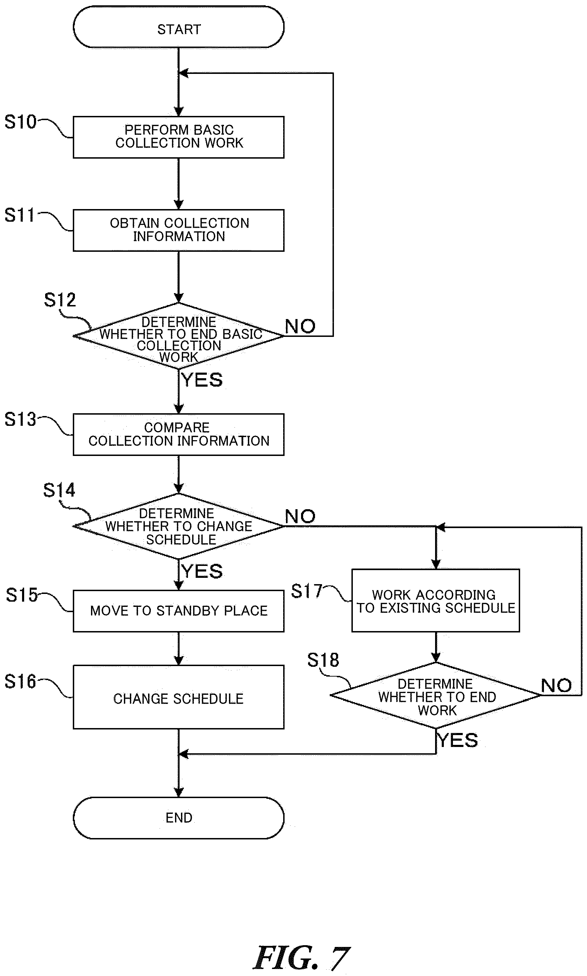

Next, an example of the processing flow illustrated in Fig. 7 will be described. With this example, basic collection work is preset. The basic collection work is selected from the work performed within a set time, the work performed along a set route, the work performed within a set distance, the work performed within a set region and so forth. With this example, the start of the working hours in the existing working schedule is "start" of the processing, the basic collection work is performed (step S10), and collection information (for example, the amount of collection by the measurement part 15) is obtained until the basic collection work ends (step S11, and step S12: NO).

When the basic collection work ends (step S12: YES), the collection information is compared with the threshold (step S13) in the same way as the example illustrated in Fig. 6, and it is determined whether to change the existing work schedule (step S14). When it is determined to change the existing work schedule (step S14: YES), the working robot 10 is moved to the standby place 20 (step S15), and the existing work schedule is changed to set the standby hours (step S16). On the other hand, when it is determined not to change the existing work schedule (step S14: NO), the work is continued until the end of the work according to the existing work schedule (step S17 and step S18).

In this way, in the front stage of the work according to the existing work schedule, the basic collection work is performed, and then it is determined whether to continue the existing work schedule. Therefore, by properly setting the basic collection work, it is possible to allow efficient collection work, and prevent the field F from being damaged due to useless traveling of the working robot 10.

In the above-described processing flow of the management controller P3, it is determined whether to change the existing work schedule after the working robot 10 has performed the collection work. However, with the following example, it is possible to determine whether to change the existing work schedule before the working robot 10 performs the collection work.

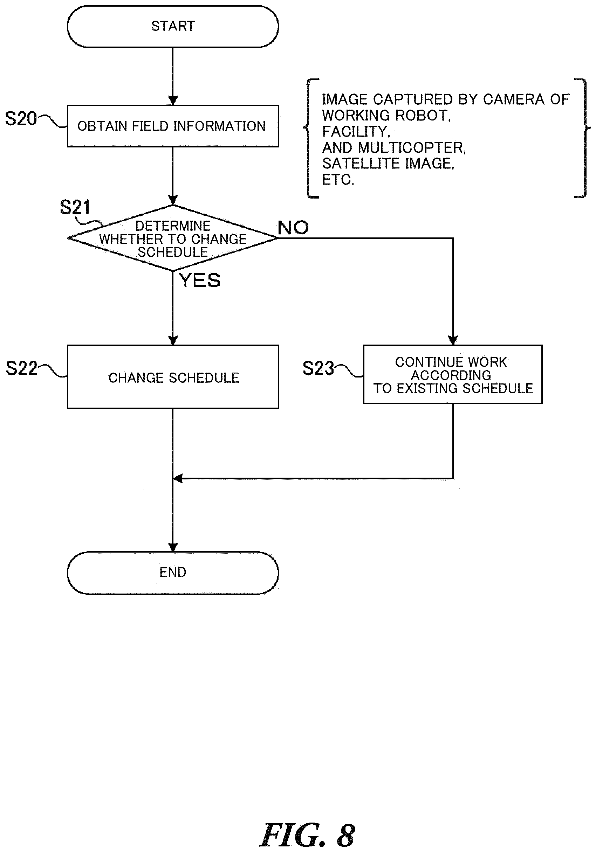

With an example illustrated in Fig. 8, the processing is started before the start of the working hours in the existing working schedule, and field information is obtained (step S20). Here, the field information is an image of the field F captured by the camera 18 equipped in the working robot 10, an image of the field F captured by the camera 32 installed in the management facility M, an image of the field F captured by the camera equipped in the multicopter 200, or a satellite image of the field F. This field information can be converted to information about the amount of target objects O on the field F by image processing, and it is determined whether to change the existing work schedule based on the information (step S21).

When it is determined that the existing work schedule should be changed, the schedule is changed, for example, the working hours are changed to the standby hours (step S22). On the other hand, when it is determined that the existing work schedule should not be changed, the existing work schedule is continued (step S23) .

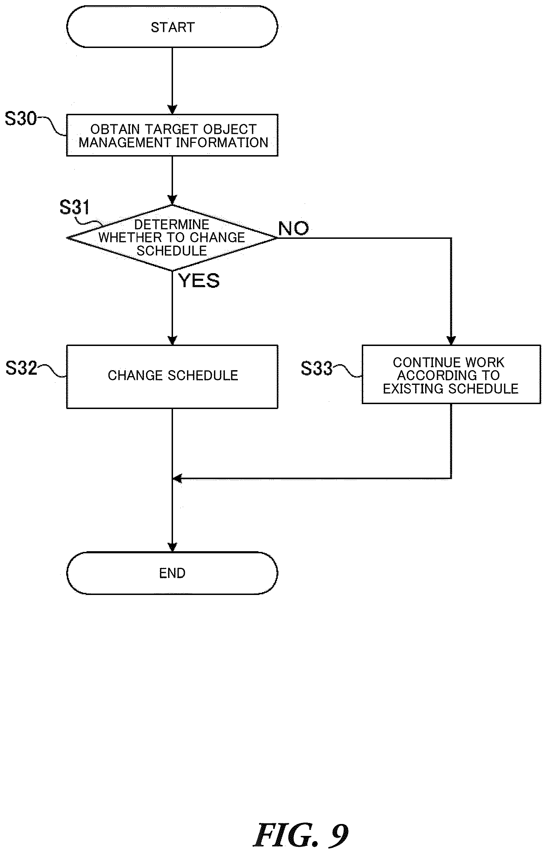

With an example illustrated in Fig. 9, the processing is started before the start of the working hours in the existing working schedule, and target object management information is obtained (step S30). Here, the target object management information is generated by the management device 30 of the management facility M, and can be indicated by, for example, the ratio of the amount of the collected target objects O to the total amount of the target objects O managed by the management facility M. When this ratio is high, the collected target objects O are large in amount, and therefore the target objects O on the field F are necessarily small in amount. On the other hand, when the ratio is low, the target objects O on the field F are necessarily large in amount.

It is determined whether to change the existing work schedule based on this information (step S31). When it is determined that the existing work schedule should be changed, the schedule is changed, for example, the working hours are changed to the standby hours (step S32). On the other hand, when it is determined that the existing work schedule should not be changed, the existing work schedule is continued (step S33).

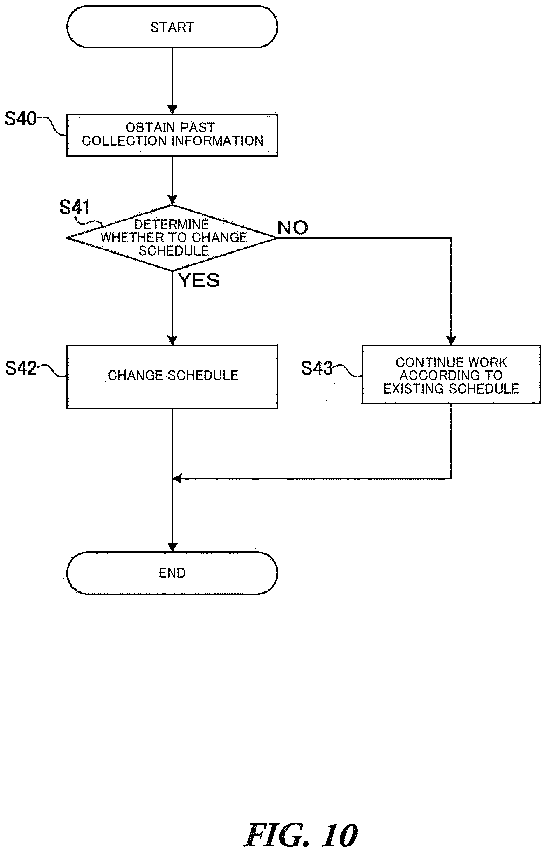

With an example illustrated in Fig. 10, it is determined whether to change the existing work schedule based on the past collection information. When the working robot 10 performs the collection work to collect the target objects O on the field F, the position information and the time information of the collected target objects O are stored in the memory 60 of the controller 10A. Then, the working robot 10 continuously performs the collection work, and therefore the past collection information indicating when and where the target objects O scattered on the field existed is stored sequentially in the memory 60.

The example illustrated in Fig. 10 can be applied to, for example, a case where the existing work schedule for one day illustrated in Fig. 5 is changed, a case where the existing work schedule for one week or one month is changed, or a case where the existing work schedule for each of the seasons of one year is changed. In this case, before the targeted existing work schedule is executed, the processing is started and the past collection information is obtained (step S40).

Then, it is determined whether to change the existing work schedule based on the information (step S41), and when it is determined that the existing work schedule should be changed, the schedule is changed, for example, the ratio between the standby hours and the working hours is changed (step S42). On the other hand, when it is determined that the existing work schedule should not be changed, the existing work schedule is continued (step S43).

To be more specific, when the existing work schedule for one day is targeted, the past collection information on the same day of a week as today or the past collection information on the same day and month as today is obtained, and the information about the amount of the target objects O on the field F today for one day is forecasted. Then, based on the forecast information, for example, on the day where it is forecasted that the target objects O on the field F is small in amount, the existing work schedule is changed to increase the ratio of the standby hours to the working hours (increase the frequency of the standby state). On the other hand, on the day where it is forecasted that the target objects O on the field F is large in amount, the existing work schedule is changed to reduce the ratio of the standby hours to the working hours (increase the working hours).

As described above, the robotic collection system 1 according to the embodiment of the invention changes the work schedule of the working robot 10 based on the current state or the past state of the target objects O on the field F. By this means, when the target objects O on the field F are small in amount, it is possible to allow efficient collection work, for example, reduce the battery consumption of the working robot 10, and reduce useless traveling on the field F to prevent the damage of the surface of the field F. On the other hand, when the target objects O on the field F are large in amount, it is possible to properly increase the collection work to realize proper management to collect the target objects O.

As described above, the embodiments of the present invention have been described in detail with reference to the drawings. However, the specific configuration is not limited to the embodiments, and the design can be changed without departing from the gist of the present invention.

The invention is limited by the scope of the claims.

### List of reference signs

1: robotic collection system, 10: working robot,
10A, 20A, 30A, U: controller,
11: traveling part,
11A: traveling drive part,
12: working part,
12A: working drive part,
13: accommodation part,
14: battery,
15: measurement part,
16: position detector, 17, 21, 31: communication part,
18, 32: camera,
19, 34: setting input part,
20: standby place,
22: charging device,
23, 33: collection amount measurement part,
30: management device,
50, 51, 52: timer,
60, 61, 62: memory,
100: satellite,
200: multicopter,
P1: traveling motion controller,
P2: working motion controller,
P3: management controller,
F, F1, F2, F3: field,
O: target object,
T: conveyance channel,
M: management facility

## Claims

1. A robotic collection system (1) comprising:
a working robot (10) configured to autonomously travel on a field to collect target objects on the field; and
a management controller (P3) configured to manage a work schedule of the working robot (10),
wherein the management controller (P3) obtains information about an amount of the target objects on the field, and changes an existing work schedule based on the information,
**characterized in that** when determining that efficiency of collection work is low based on the information, the management controller (P3) increases the frequency of a standby state of the working robot (10).

2. The robotic collection system (1) according to claim 1, wherein the management controller (P3) compares the information obtained under a set condition with a threshold to change the work schedule.

3. The robotic collection system (1) according to one of claims 1 and 2, wherein a standby place of the working robot (10) is a discharge place where the target objects collected by the working robot (10) are discharged.

4. The robotic collection system (1) according to one of claims 1 to 3, wherein the information is based on an amount of the target objects collected by the working robot (10).

5. The robotic collection system (1) according to one of claims 1 to 4, wherein the information is obtained from the working robot (10) collecting the target objects on the field.

6. The robotic collection system (1) according to one of claims 1 to 4, wherein the information is obtained from a facility that manages a state of use of the target objects.

7. The robotic collection system (1) according to one of claims 1 to 6, wherein the information is obtained from a captured image of the field.

## Patentansprüche

1. Robotisches Sammelsystem (1), umfassend:
einen Arbeitsroboter (10), der konfiguriert ist, um autonom auf einem Feld zu fahren, um Zielobjekte auf dem Feld zu sammeln; und
eine Verwaltungssteuerung (P3), die konfiguriert ist, um einen Arbeitsablauf des Arbeitsroboters (10) zu verwalten,
wobei die Verwaltungssteuerung (P3) Informationen über eine Menge der Zielobjekte auf dem Feld erhält und einen bestehenden Arbeitsablauf basierend auf den Informationen ändert,
**dadurch gekennzeichnet, dass** die Verwaltungssteuerung (P3), wenn sie basierend auf den Informationen bestimmt, dass die Effizienz der Sammelarbeit niedrig ist, die Frequenz eines Bereitschaftszustands des Arbeitsroboters (10) erhöht.

2. Robotisches Sammelsystem (1) nach Anspruch 1, wobei die Verwaltungssteuerung (P3) die Informationen, die unter einer eingestellten Bedingung erhalten werden, mit einem Schwellenwert vergleicht, um den Arbeitsablauf zu ändern.

3. Robotisches Sammelsystem (1) nach einem der Ansprüche 1 und 2, wobei eine Bereitschaftsstelle des Arbeitsroboters (10) eine Entladestelle ist, an der die Zielobjekte, die durch den Arbeitsroboter (10) gesammelt werden, entladen werden.

4. Robotisches Sammelsystem (1) nach einem der Ansprüche 1 bis 3, wobei die Informationen auf einer Menge der Zielobjekte basieren, die durch den Arbeitsroboter (10) gesammelt werden.

5. Robotisches Sammelsystem (1) nach einem der Ansprüche 1 bis 4, wobei die Informationen von dem Arbeitsroboter (10) erhalten werden, der die Zielobjekte auf dem Feld sammelt.

6. Robotisches Sammelsystem (1) nach einem der Ansprüche 1 bis 4, wobei die Informationen von einer Einrichtung erhalten werden, die einen Verwendungszustand der Zielobjekte verwaltet.

7. Robotisches Sammelsystem (1) nach einem der Ansprüche 1 bis 6, wobei die Informationen von einem aufgenommenen Bild des Feldes erhalten werden.

## Revendications

1. Système de collecte robotique (1) comprenant :
un robot travailleur (10) configuré pour se déplacer de manière autonome sur un champ pour collecter des objets cibles sur le champ ; et
un contrôleur de gestion (P3) configuré pour administrer un programme de travail du robot travailleur (10),
dans lequel le contrôleur de gestion (P3) obtient des informations concernant une quantité des objets cibles sur le champ, et modifie un programme de travail existant sur la base des informations,
**caractérisé en ce que**, lorsqu'il est déterminé que l'efficacité du travail de collecte est faible sur la base des informations, le contrôleur de gestion (P3) augmente la fréquence d'un état d'attente du robot travailleur (10).

2. Système de collecte robotique (1) selon la revendication 1, dans lequel le contrôleur de gestion (P3) compare les informations obtenues dans une condition définie à un seuil pour modifier le programme de travail.

3. Système de collecte robotique (1) selon l'une des revendications 1 et 2, dans lequel un lieu d'attente du robot travailleur (10) est un lieu de déchargement où les objets cibles collectés par le robot travailleur (10) sont déchargés.

4. Système de collecte robotique (1) selon l'une des revendications 1 à 3, dans lequel les informations sont basées sur une quantité des objets cibles collectés par le robot travailleur (10).

5. Système de collecte robotique (1) selon l'une des revendications 1 à 4, dans lequel les informations sont obtenues à partir du robot travailleur (10) collectant les objets cibles sur le champ.

6. Système de collecte robotique (1) selon l'une des revendications 1 à 4, dans lequel les informations sont obtenues à partir d'une installation qui gère un état d'utilisation des objets cibles.

7. Système de collecte robotique (1) selon l'une des revendications 1 à 6, dans lequel les informations sont obtenues à partir d'une image capturée du champ.
